Europäisches Patentamt

European Patent Office

Office européen des brevets

(11) Publication number: **0 119 658**
**B1**

(12) **EUROPEAN PATENT SPECIFICATION**

(45) Date of publication of patent specification: **22.06.88**

(51) Int. Cl.⁴: **A 01 D 43/08**

(21) Application number: **84200362.6**

(22) Date of filing: **14.03.84**

(54) **Pull-type forage harvesters.**

(30) Priority: **17.03.83 GB 8307440**

(43) Date of publication of application:
**26.09.84 Bulletin 84/39**

(45) Publication of the grant of the patent:
**22.06.88 Bulletin 88/25**

(84) Designated Contracting States:
**DE FR GB**

(56) References cited:
**DE-B-1 027 923**
**FR-A-2 263 676**
**GB-A- 669 837**
**GB-A- 758 780**
**GB-A-1 165 096**
**US-A-2 720 070**
**US-A-2 787 877**
**US-A-3 100 370**
**US-A-4 018 036**

(73) Proprietor: **NEW HOLLAND N.V.**
**Leon Claeysstraat 3a**
**B-8210 Zedelgem (BE)**

(72) Inventor: **Mortier Frans H.**
**Buurtstraat 12B**
**B-9990 Maldegem (BE)**

(74) Representative: **Vandenbroucke, Alberic T.J.**
**et al**
**SPERRY NEW HOLLAND DIVISION OF SPERRY**
**N.V. Leon Claeysstraat, 3A**
**B-8210 Zedelgem (BE)**

Courier Press, Leamington Spa, England.

## Description

This invention relates to pull-type forage harvesters.

Pull-type forage harvesters are well known in the art and normally comprise a harvesting unit having a drawbar pivotally connected thereto so that the unit can be towed directly behind a tractor for transport purposes, or towed to one side of the tractor for the harvesting operation. The harvesting unit either cuts standing crop or picks up windrowed crop, chops it into small pieces and delivers it through a pivotable spout to a receptacle which is usually a towed trailer or wagon.

The trailer is sometimes towed directly behind the harvesting unit, such as is made possible with the forage harvester shown in GB—A—1.165.096. Alternatively the trailer sometimes is towed directly behind another tractor which is driven alongside the harvesting unit. A trailer located directly behind the harvesting unit is preferable from the standpoint of trailer loading in that the delivery spout on the harvesting unit can be pivoted from side to side without hindrance to spread the chopped crop material evenly in the trailer. On the other hand this arrangement suffers from a serious disadvantage in that in use, there is a considerable side drag on the harvester unit which increases as the trailer is loaded. This side drag manifests itself by lifting force on one of the harvester wheels which can become so great that the harvester becomes unstable. This problem of instability can become critical when working on side hills and is further aggravated if the harvester has a relatively short wheel axle. Other harvesters, such as the mower-conditioner shown in US—A—4.018.036, and which equally are arranged to be operated in offset relationship relative to the pulling tractor, do not suffer much from this side drag to the extent that no trailer or other further implement, in use, is attached to the rear thereof.

The alternative known arrangement of the trailer being towed directly behind a further tractor driven alongside the harvester much reduces the problem of side drag on the harvester by the first tractor but introduces a different disadvantage in that loading of the trailer is made relatively difficult. Also it should be noted that side drag is reduced but not eliminated so that harvester stability still remains a problem.

When harvesting standing crop, it is essential for the harvesting unit either to be offset relative to the tractor (as already discussed) or mounted in front thereof, otherwise the tractor has to run over the standing crop before it is cut by the harvesting unit which is unacceptable because a proportion of crop is thus damaged and wasted. With an offset arrangement a pivotal drawbar has to be employed which is relatively expensive. As is quite conventional and as is illustrated in GB—A—1.165.096, such a pivotal drawbar may be coupled to the frame of the harvester at one side thereof whereby basically an asymmetric design is obtained. If further also is known from the art of mower-conditioners to pivotally attach the drawbar to the frame of the machine at a generally central location, as seen in transverse direction, and rearwardly of the header and to make the drawbar of an arched shape for extending over the header; the arrangement being so as to permit the mower-conditioner to be operated in offset relationship, at wish, either to the left or to the right of the pulling tractor. Such a mower-conditioner is illustrated in US—A—4.018.036.

With a front mounted harvesting unit, such as disclosed in US—A—2.811.004, the manoeuvrability of the tractor is impaired and the tractor driver has difficulty in seeing the front end of the harvesting unit which is important in order to maximize the harvest. Furthermore, the delivery spout has to extend from the harvesting unit, over the tractor to the trailer which is towed directly behind the latter. The spout has to be supported on the tractor which makes the mounting and detachment of the harvesting unit time-consuming. Also, the spout further impairs the driver's visibility and a powerful blower needs to be provided if chopped crop material is to be deliverable to all parts of the trailer. In view of all the disadvantages of the front-mounted arrangement disclosed in US—A—2.811.004 this type of machine has never been successful. The side drag and loading problems of offset arrangements and the shortcomings of front-mounted arrangements leave a gap in preferably available forage harvesters of the pull type.

It is the objective of the present invention to provide a pull-type forage harvester having a pick-up device which is particularly suitable for use in a one-man operation; which does not suffer from dangerous side dragging during operation, even when operating under hilly conditions; which facilitates the transfer of chopped crop material from the harvester to a forage wagon; which furthermore is simple in design and use and inexpensive to manufacture and which finally reduces crop losses which, during operation of conventional pull-type forage harvesters result from at least the tractor riding over crop material during part of the harvesting operation.

According to the present invention a pull-type forage harvester is provided which is adapted for being pulled behind a pulling tractor and for coupling a forage wagon thereto and for coupling a forage wagon thereto and which comprises:
— a frame supported on at least a pair of ground engaging wheels;
— a crop pick-up device mounted on the frame at a location forwardly of the ground engaging wheels;
— a cutterhead mounted on the frame generally intermediate said at least one pair of ground engaging wheels and rearwardly of the pick-up device generally in alignment with the discharge end thereof for, in use, receiving crop material from said pick-up device;
— a drawbar connected at one end to the frame at a position rearwardly of the pick-up and extending forwardly of the harvester and having the other end thereof terminating in a first hitch for connection to said pulling tractor; and

— a second hitch attached to the frame at the rear of the harvester for coupling said forage wagon thereto; said forage harvester further being characterized in that:

— the drawbar is rigidly attached at its one end to the frame;

— said drawbar and the cutterhead have basically a common fore-and-aft extending vertical plane of symmetry;

— said drawbar extends over the pick-up device in the forward direction of motion and

— the second hitch is positioned generally at said plane of symmetry; the arrangement being such that, for use, the forage harvester is attachable behind the pulling tractor generally in fore-and-aft alignment therewith on the one hand and the forage wagon is attachable behind the forage harvester equally generally in fore-and-aft alignment therewith on the other hand.

When the drawbar is attached to a tractor or other towing vehicle, and the rear hitch has a trailer or wagon connected thereto, there is provided an in-line "train" which is extremely stable even when on transversely sloping ground. The need for a relatively expensive pivotal drawbar is obviated and the entire drive line is simplified. Furthermore, the trailer or wagon can be loaded evenly without difficulty.

The forage harvester according to the invention further also comprises a generally upright discharge spout in communication with, and positioned generally rearwardly of the cutterhead; said cutterhead, said drawbar and at least a portion of said discharge spout having basically a common fore-and-aft extending vertical plane of symmetry. The drawbar preferably includes a main portion which extends downwardly from a raised location in the direction toward the first hitch for accommodating at least the pick-up device therebelow. More specifically, the drawbar preferably has a generally upwardly arched shape for accommodating at least said pick-up device therebelow. The pick-up device, the cutterhead and the drawbar also may have basically a common fore-and-aft extending plane of symmetry although in a preferred embodiment the pick-up device has its own fore-and-aft extending vertical plane of symmetry which is slightly transversely offset relative to the basically common fore-and-aft extending vertical plane of symmetry of the cutterhead and the drawbar.

The forage harvester may further comprise an auger structure comprising an auger rotatably mounted on the frame and an auger trough fixed to the frame and cooperable with the auger; the pick-up device being operable to deliver crop material to the auger structure and mounted for pivotal movement relative to the auger structure at a location generally in front and in proximity to the leading edge of the auger trough and about an axis disposed rearwardly of, and beneath, the auger structure. Preferably, the forward edge of the auger trough is disposed below and between the leading edge of the auger and the axis of rotation of the latter. When in its operative position, the pick-up device may have its discharge end in close proximity to, and generally aligned with, but positioned slightly above, the level of the auger trough.

In accordance with another aspect of the invention the distance between the wheels of the or each pair of wheels is variable to suit ground and crop conditions. In the latter connection, it is extremely convenient to be able to shorten the transverse distance between the wheels of the or each pair when adjacent windrows are closely spaced since this avoids the wheels running over the window adjacent the one being picked up. It is equally convenient for the farmer to be able to increase the transverse distance between the wheels of the or each pair for improving the stability of the harvester unit especially for operation on hill sides and with a trailer attached to the forage harvester.

The variability of the distance between the wheels of the or each pair may be accomplished by the use of a telescopic axle. Alternatively, a plurality of pairs of fixed mounting points may be provided spaced fore-and-aft of the machine.

Forage harvesters constructed in accordance with the present invention will now be described in greater detail, by way of example, with reference to the accompanying drawings, in which:

Figure 1 is a schematic side view of one forage harvester,

Figure 2 is a view generally similar to that of Figure 1 but showing certain components in alternative positions,

Figure 3 is an enlarged view of a portion of Figure 1,

Figure 4 is a plan view of Figure 1 showing certain drives,

Figure 5 is a view similar to that of Figure 4 but omitting some drives and showing others, and showing certain components in alternative positions.

Figure 6 is a detail of a component of the forage harvester of Figure 1, and

Figure 7 is similar to that of Figure 1 but showing an alternative embodiment of forage harvester.

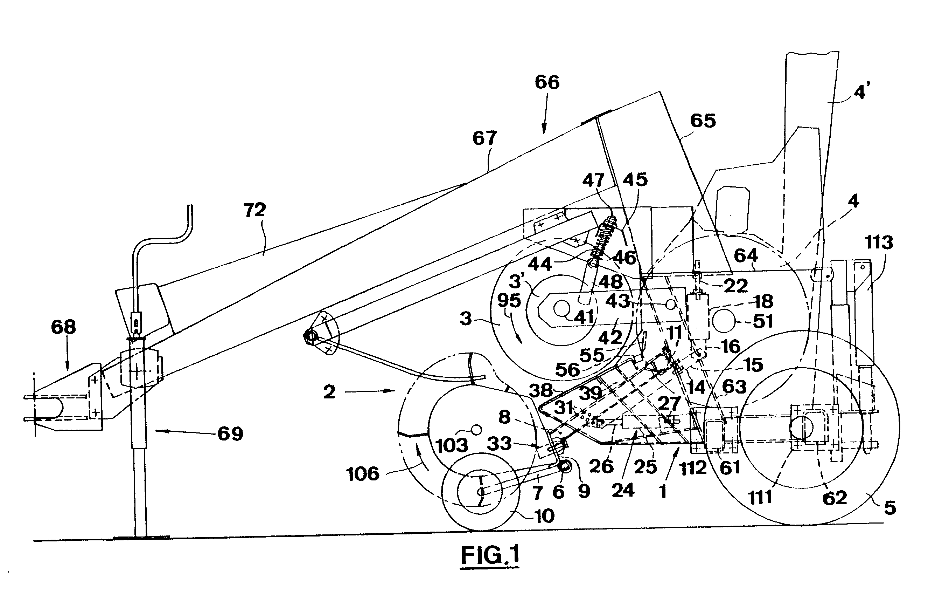

Referring to Figures 1 to 6, the forage harvester comprises a frame or chassis 1 on which are mounted a conventional pick-up device 2, an auger 3 to which in use the pick-up device feeds crop material, and a cutterhead 4 fitted with a partially pivotal delivery or discharge spout 4'. A pair of ground-engaging wheels 5 is fitted to the frame 1 and the pick-up device 2 is provided with a wheel 10 which can be raised and lowered about a pivot shaft 6 to which it is connected by an arm 7. When in the lowered, operative position, the wheel 10 contacts the ground and follows the ground contour, whereby it raises and lowers the pick-up device 2 accordingly so that the latter maintains a substantial constant ground clearance.

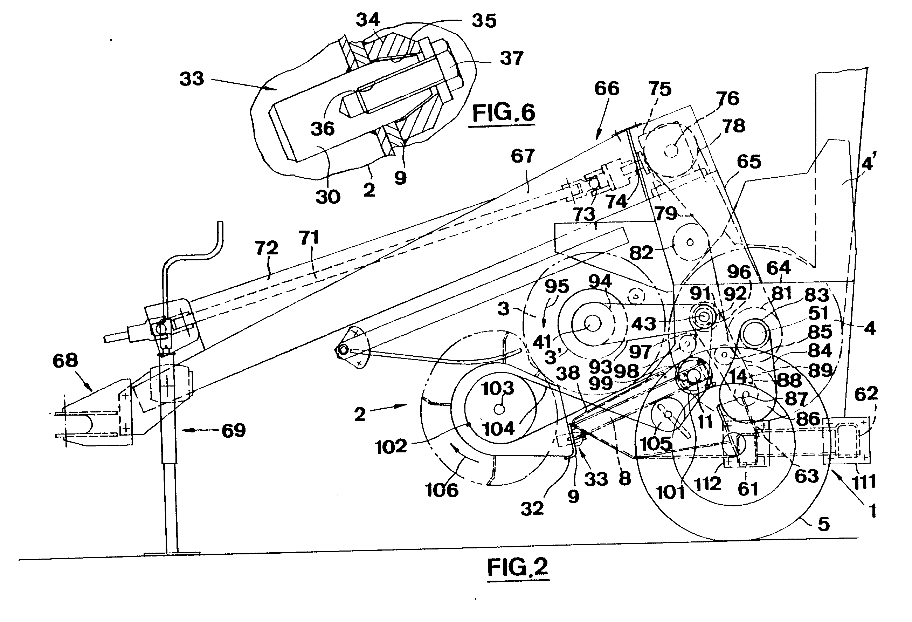

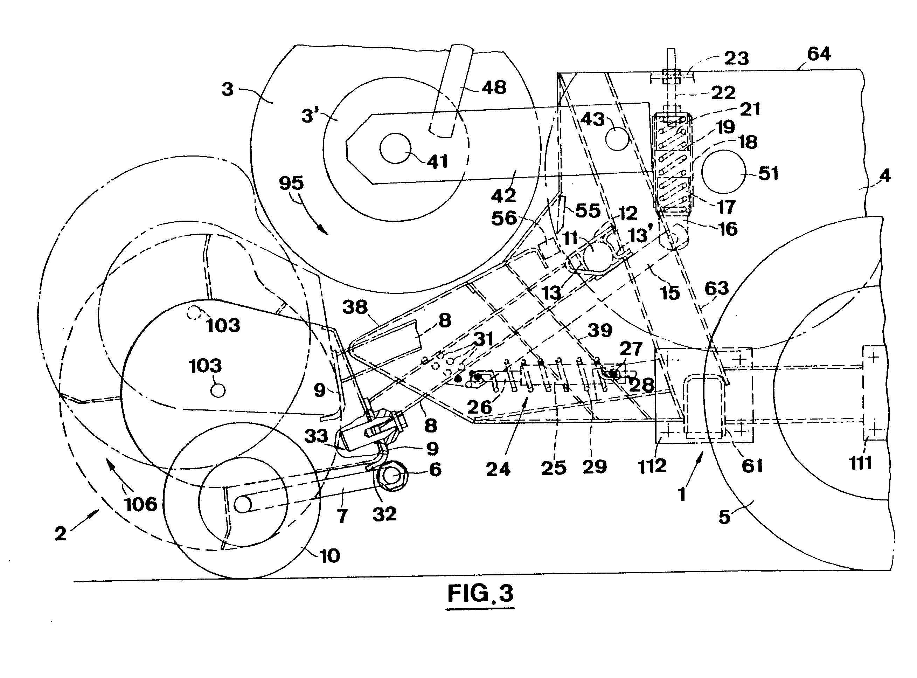

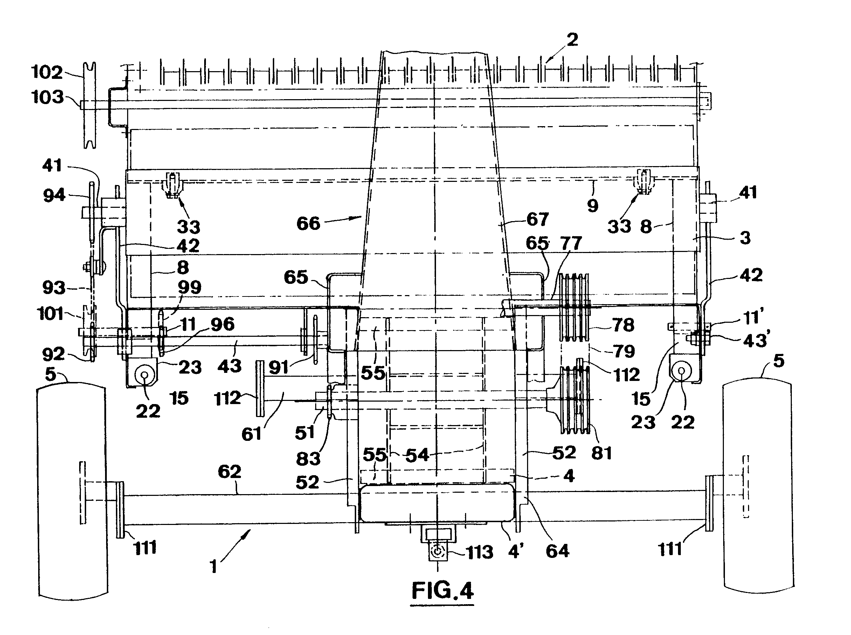

Generally vertical movement of the pick-up device 2 necessary to maintain this ground clearance is permitted by the mounting arrangement for the device which comprises a frame including a pair of relatively long arms 8 each attached at the forward end to a bracket 9 and pivotally attached at the other end to a pivot 11 or 11' via a generally U-shaped bracket 12 (best seen in Figure 3) having an insert 13 for contact with a portion of the pivot shaft and closeable by another insert 13' which is also U-shaped and contacts another portion of the pivot shaft, the inserts together defining a partial bush for the pivot shaft. The insert 13' is held in position by a headed pin 14 (Figures 1 and 2) which extends through aligned holes in the limbs of the brackets 12 and the limbs of the insert 13' and which is retained by a split pin (not shown) engageable with an aperture in the end of the pin 14. Each arm 8 is provided with an extension 15 the outer end of which is pivotally attached to a short link 16 connected to the exterior of the base of a cup 17 (Figure 3) slideably mounted in one end of a cylinder 18. A further cup 19 is attached to the distal end of the cylinder 18 with the two cups 17 and 19 being arranged to receive therebetween a compression spring 21. It should be noted that the righthand pivot 11' (Figure 4) is in the form of a spigot attached to the frame 1, whereas the lefthand pivot 11 is in the form of a shaft rotatably mounted on the frame.

The pick-up device is resiliently suspended in a manner floatingly to follow the ground contour by the cylinder 18 and spring 21 arrangements, the extent of resilient suspension or compensation of each arrangement being adjustable by a threaded rod 22 connected at one end to the further cup 19 and at the other end received in a bracket 23 attached to the frame 1.

The pick-up device is movable between a lowered, operative position (ahown in full lines in Figures 1 and 3) and a raised, transport position (shown in full lines in Figure 2 and broken lines in Figure 3) by a single-acting hydraulic actuator 24 (Figures 1 and 3), the cylinder 25 of which is pivotally connected to the frame 1 and the piston 26 of which is pivotally connected to one of the pick-up arms 8. The pivotal attachment of the cylinder 25 to the frame 1 is effected by a pivot pin 27 extending from the cylinder 25 and being both slidably and rotatably received in a slot 28 formed in the frame 1, which provides a lost motion connection. In the operative position of the pick-up device 2, the pin 27 is arranged to be positioned intermediate the ends of the slot 28, whereby it can slide therein in response to movement of the pick-up device in following the ground contour without the necessity for any extension and/or contraction of the piston 26. When the actuator 24 is energised, the cylinder 25 first moves to the right (as seen in Figures 1 and 3) until the pin 27 engages one end of the slot 28, whereupon the pick-up device 2 raised to the transport position. When the pick-up device 2 is required in the operative position, the actuator 24 is de-energised to allow the pick-up to lower, retraction of the piston 26 being assisted by a spring 29 (Figure 3).

A plurality of apertures 31 is provided by which the point of connection of the piston 26 to the pick-up mounting can be adjusted to suit the required working height of the pick-up device 2. The use of relatively long mounting arms 8 for the pick-up device 2 enables the pivot shaft 11 therefor to be located as far rearwardly of the machine as possible in order to impart substantially rectilinear movement to the pick-up when it moved to and from the operative position. This prevents the pick-up 2 fouling the auger 3 when moved to the transport position.

The bracket 9 is provided with a forwardly-extending lip or flange 32 which provides a seat for the pick-up device 2, more specific location and attachment being provided by two transversely-spaced, releasable connectors 33 shown in detail in Figure 6. Each connector 33 comprises a female socket 34 attached to the bracket 9 and having a conical through-bore 35. A correspondingly shaped male spigot 30 is provided on the pick-up device 2 having a threaded bore 36 for reception of a securing bolt 37. The connectors 33 provide very positive mounting and location devices which are simple to operate for the mounting and detachment of the pick-up device 2.

The auger 3 receives crop material from the pick-up device 2 and transfers it to the cutterhead 4 in cooperation with an auger floor or trough 38 attached to members 39 forming part of the frame 1. The auger 3, contrary to known arrangements, is mounted independently of the pick-up device 2 and is mounted relative to the cutterhead 4 in order to optimise feeding of crop material to the latter which is critical for efficient operation of the forage harvester. Although the auger 3 is essentially fixed relative to the cutterhead 4, it is capable of a small amount or relative movement both with respect to the cutterhead and the floor 38 in order to accommodate any relatively large lumps of crop material fed to the latter. This movement is provided for by mounting each end of the auger shaft 41 on one end of an arm 42, the other end of which is attached to a pivot 43 or 43' (Figure 1). Auger movement is damped by a pair of springs 44 (Figure 1), one provided at each end of the auger. Each spring 44 acts between a bracket 45 attached to the frame 1 and an abutment 46 carried by a rod 47 which passes through the spring. The rod 47 is slidably received at one end in the bracket 45 and pivotally attached at the other end to a link 48 fixed intermediate the ends of the associated arm 42. It should be noted that the right-hand pivot 43' (Figure 4) is in the form of a bolt carried by the frame 1, whereas the lefthand pivot 43 is a shaft mounted for rotation on the frame 1 and extending from the adjacent side of the cutterhead 4 to the lefthand side of the machine.

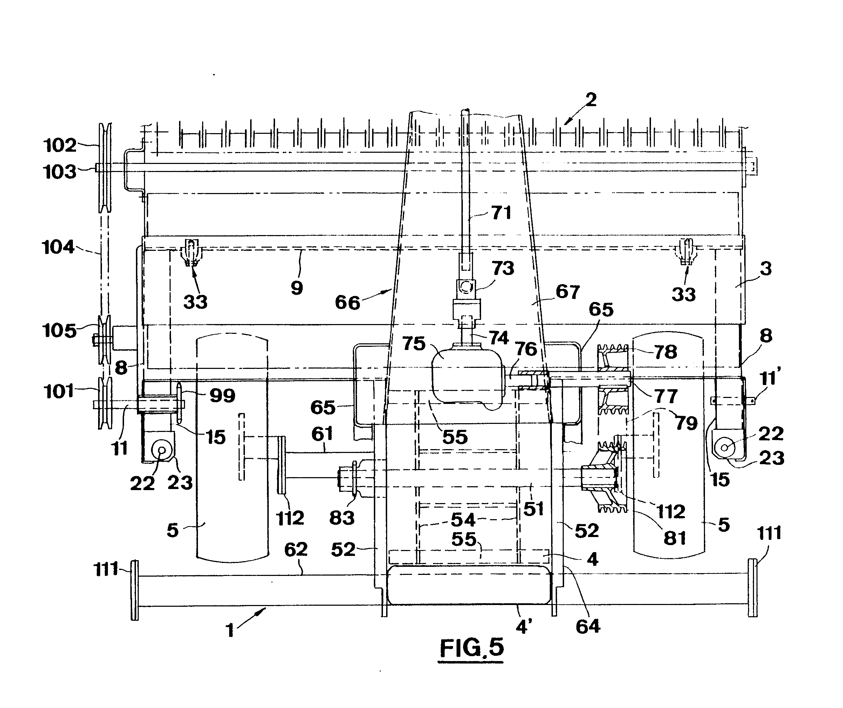

The cutterhead 4 is conventional and comprises a drive shaft 51 rotatably mounted in sidewalls 52 of the housing or casing 64 and carrying a pair of flanges 54 to the outer circumference of which are attached knives 55 which cooperate with a shear-bar 56 (Figures 1 and 3). It should be noted that the cutterhead 4 is shown more fully in Figures 4 and 5 but only in general outline in the remaining figures.

Looking now more closely at the frame 1, this comprises two transverse main beams 61, 62 spaced longitudinally of the machine. From the foremost beam 61 there extend two members 63 which support the overall casing 64 of the machine. From the top of the casing 64 there extend two forwardly and upright inclined members 65 forming part of a drawbar 66 for the machine. The members 65 are spaced apart transversely of the machine and between them is rigidly fixed the main portion 67 of the drawbar which is of hollow construction and formed from plates bolted or otherwise secured together. The main drawbar portion 67 extends forwardly and downwardly from the members 65 over the auger 3 and pick-up device 2 and tapers towards the front end both in width and in height as seen in Figures 1 and 2 and Figures 4 and 5, respectively. The main drawbar portion 67 terminates in a conventional hitch 68 for connection to a tractor or other towing vehicle (not shown). A jack 69 is fitted towards the front end of the drawbar 66 to support the machine when unhitched as shown in Figure 1.

Drive for the various components of the forage harvester is provided from the power-take-off (PTO) shaft of the tractor or other towing vehicle which is connected to a main drive shaft 71 (Figures 2 and 5) of the machine which extends in a non-parallel relationship with the main drawbar portion 67, whereby the forward position of the shaft is contained within an extension 72 of the main drawbar portion with the remainder being accommodated within the latter.

The drive shaft 71 is connected via a universal joint 73 to an input shaft 74 of a gearbox 75 mounted in the rear, upper portion of the drawbar 66. An output shaft 76 of the gearbox 75 extends transversely of the machine and is connected to a shaft 77 carrying a pulley 78. The drives for the forage harvester components are essentially conventional and will, therefore, be described only briefly. Furthermore, the drives are split between several figures of the drawings in order not to obscure any given figure.

A belt 79 (Figures 2 and 5) extends from around the pulley 78 to a pulley 81 on one end of the cutterhead shaft 51, whereby the latter is driven, a tension pulley 82 being provided. The cutterhead shaft 51 also carries a sprocket 83 at its other end from which a chain 84 extends, via an idler sprocket 85, to a larger diameter sprocket 86 (not shown in Figure 4) carried by an idler shaft 87. The idler shaft 87 in fact carries a double sprocket, the second sprocket 88 being of smaller diameter than the first sprocket 86. A chain 89 extends from around the sprocket 88 to another sprocket 91 carried by the auger pivot shaft 43 to drive the same. A second sprocket 92 provided on the end of the pivot shaft 43 has a chain 93 extending there around to a sprocket 94 carried by the auger shaft 41 which is thus driven in the desired direction indicated by the arrow 95. A third sprocket 96 is carried by the auger pivot shaft 43 and forms part of the drive for the pick-up device 2. A chain 97 extends from the sprocket 96, via an idler sprocket 98, to a sprocket 99 mounted on the pick-up pivot shaft 11 which also carries a pulley 101. A pulley 102 is provided on a drive shaft 103 for the pick-up device 2 and a crossed belt 104 extends between the pulleys 101 and 102 via an adjustable tension pulley 105. The belt 104 is crossed in order to drive the pick-up device 2 in a direction 106 opposite to that in which the auger 3 is driven.

The ground-engaging wheels 5 are adjustably mounted on the frame 1 in order to be able to select a wide or less wide transverse spacing thereof to suit harvesting conditions. The wide spacing of the wheels 5 is shown in Figures 1, 3 and 4, with the narrower spacing being shown in Figures 2 and 5. In Figures 1, 3 and 4, each wheel 5 is mounted for rotation on a wheel mounting bracket 111 attached to one end of the rearmost transverse beam 62 of the frame 1. In Figure 2 and 5 the wheels 5 are attached to alternative wheel mounting brackets 112 provided on the ends of the foremost beam 61 which is shorter than the beam 62 as can be seen in Figures 4 and 5.

An automatic hitch 113 is mounted on the rearmost beam 62 for attachment of a forage trailer or wagon (not shown). The hitch 113 is removably mounted on the beam 62 and may need to be removed when the wheels 5 are attached to the beam 61 to make hitching of a trailer to the forage harvester impossible when the wheels are positioned at the narrow spacing. The stability of the harvester with narrow wheel spacing may in fact be insufficient to allow attachment of a trailer to the rear of the harvester, especially when working on side hills. The selection of the narrower transverse wheel spacing is usually made when closely spaced windrows are being handled so that the wheels 5 do not run over the windrow adjacent the one being picked up. Under these operating conditions, the forage trailer is usually pulled by another tractor alongside the forage harvester. When machine stability becomes critical, such as when a trailer is hitched to the rear of the harvester and when operating on side hills, a wider wheel spacing beomes desirable and hence the mounting brackets 112 on the beam 62 are used.

In order to avoid in general the fouling of the adjacent windrow, in the case of extremely closely spaced windrows, by the pick-up device 2 and by the harvester wheels 5, the drawbar 66 is slightly offset from the centre of the machine (as seen in Figures 4 and 5) so that the right-hand wheel 5 and the right-hand end of the pick-up device 2 are effectively moved away from the adjacent windrow. It will be noted that the drawbar 66 is aligned with the cutterhead 4, whereby the latter is also offset from the centre of the machine. Furthermore, the automatic hitch 113 is mounted in line with the common centre line of the drawbar 66 and the cutterhead 4. This arrangement is preferred as it provides a very stable "train" of tractor, forage harvester and wagon or trailer.

In use, the forage harvester is hitched to the tractor or other towing vehicle and the PTO of the latter connected to the main drive shaft 71. A trailer or wagon is then hitched to the forage harvester and the "train" is ready for operation, perhaps first being driven to the field containing windrowed crop. The in-line "train" is, of course, very suitable for transport to and from the field and indeed it is normally used by known harvesters. The difference is that with known arrangements, the harvester has to be moved to a position offset from the tractor before harvesting can commence. However, the present invention obviates the need for this, thereby saving time but more importantly dispensing with the pivoted drawbar which is a relatively expensive component. When in the field of operation, the pick-up device 2 is moved from the raised, transport position (Figure 2) to the lowered, operative position of Figures 1 and 3 by de-energising the hydraulic actuator 24. The tractor then pulls the forage harvester and trailer up and down the field, it being possible to commence harvesting at one extreme edge of the field due to the in-line "train" whereas with known arrangements, one has to start with an inner windrow and harvest the extreme windrow or windrows during a reverse pass.

The stability of the in-line "train" is extremely good even when the trailer is becoming fully loaded, and the loading is achieved without difficulty since the upper portion of the delivery spout 4' can be moved from side to side without hindrance. The drawbar 66 is relatively short which results in good handling and reduced manufacturing costs. Also, the design of the machine in general, and of, the driveline between the tractor and the forage harvester in particular is much simpler, again reducing costs. These savings, together with that arising from the use of a non-pivoted drawbar already discussed, can reduce the standard variable cost of a machine by 25% which is extremely significant.

As already mentioned, the relatively long arms 8 give substantially rectilinear movement to the pick-up device 2 as it is moved to and from the transport position. If relatively short arms were to be employed, the pick-up movement would be more arcuate with a resulting tendency for the pick-up to foul the auger 3 on being raised unless adequate spacing of these two components were provided which would detract from the crop feeding operation therebetween. The minimum transport height of the pick-up device is typically 10 inches (25 centimetres).

The long arms 8 also serve to position the pick-up pivot axis generally vertically below the auger pivot axis which helps considerably in simplifying the drive layout for the driven components. The extensions 15 of the arms 8 are arranged to extend only a relatively short distance from the pick-up pivot axis to the links 16. In this way, any movement of the pick-up device about its pivot axis in following the ground contour results in a very much smaller movement of the links 16 and hence the associated springs 17. Thus a very constant compensation rate is achieved which would not be the case if large extensions and contractions of the springs 17 were occasioned as the spring characteristics thereof would vary.

It will be noted that the leading edge of the auger trough 38 is disposed generally vertically below the leading edge of the auger tube 3' to which the auger flights are attached, the flights being of opposite hand and being separated by feeder means (not shown), as is conventional, to feed the crop material to the cutterhead 4. It will also be noted that, in its operative position, the pick-up device 2 has its discharge end in close proximity to, and generally aligned with, although positioned slightly above, the level of the auger trough 38.

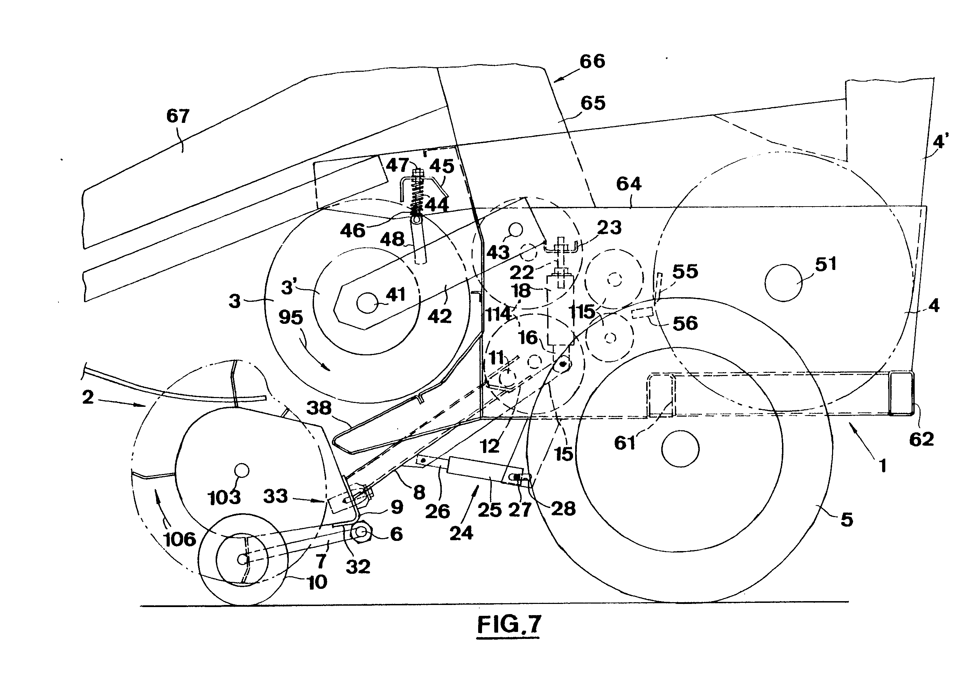

The embodiment of Figures 1 to 6 shows what is known as a fine chop machine but the invention is equally applicable to a precision chop machine which employs feed rolls between the auger and the cutterhead. A precision chop machine is shown in Figure 7 of the drawings and it will be noted that this machine is basically the same as that of Figures 1 to 6 (like components being accorded the same reference numerals) inasmuch as it comprises an identical pick-up device 2, auger 3 and cutterhead 4 although the latter is spaced further from the auger 3 in order to accommodate the feed rolls. The feed rolls comprise a forward pair of rolls 114 and a pair of rearward rolls 115 of smaller diameter. The auger 3 is located with respect to the feed rolls 114 such that optimum feeding of crop material is effected although, as before, small movements of the auger can take place in order to accommodate any lumps of crop material fed thereto.

In the embodiments of Figures 1 to 6 and Figures 7, the alternative transverse spacing of the wheels 5 is accomplished by providing mounting points spaced longitudinally of the machine with the greater spacing provided by the rearmost mounting points. This is not essential and the forwardmost mounting points can provide the greater transverse spacing. Furthermore, more than two alternative spacings may be provided. Also, the use of alternative mounting points may be dispensed with in favour of a telescopic axle the length of which can be adjusted to provide the desired transverse wheel spacing.

Aspects of the forage harvester as described herein are claimed in the co-pending european patent application no. 89 200 363.4.

## Claims

1. A pull-type forage harvester adapted for being pulled behind a pulling tractor and for coupling a forage wagon thereto and comprising:
— a frame (1) supported on at least a pair of ground engaging wheels (5);
— a crop pick-up device (2) mounted on the frame (1) at a location forwardly of the ground engaging wheels (5);
— a cutterhead (4) mounted on the frame (1) generally intermediate said at least one pair of ground engaging wheels (5) and rearwardly of the pick-up device (2) generally in alignment with the discharge end thereof for, in use, receiving crop material from said pick-up device (2);
— a drawbar (66) connected at one end to the frame (1) at a position rearwardly of the pick-up device (2) and extending forwardly of the harvester and having the other end thereof terminating in a first hitch (68) for connection to said pulling tractor; and
— a second hitch (113) attached to the frame (1) at the rear of the harvester for coupling said forage wagon thereto,
   characterized in that:
— the drawbar (66) is rigidly attached at its one end to the frame (1);
— said drawbar (66) and the cutterhead (4) have basically a common fore-and-aft extending vertical plane of symmetry;
— said drawbar (66) extends over the pick-up device (2) in the forward direction of motion and
— the second hitch (113) is positioned generally at said plane of symmetry; the arrangement being such that, for use, the forage harvester is attachable behind the pulling tractor generally in fore-and-aft alignment therewith on the one hand and the forage wagon is attachable behind the forage harvester equally generally in fore-and-aft alignment therewith on the other hand.

2. A forage harvester according to claim 1, characterized in that the forage harvester further also comprises a generally upright discharge spout (4') in communication with and positioned generally rearwardly of the cutterhead (4); said cutterhead (4), said drawbar (66) and at least a portion of said discharge spout (4') having basically a common fore-and-aft extending vertical plane of symmetry.

3. A forage harvester according to claim 1 or 2, characterized in that the drawbar (66) includes a main portion (67) which extends downwardly from a raised location in the direction toward the first hitch (68) for accommodating at least the pick-up device (2) therebelow.

4. A forage harvester according to claim 1 or 2, characterized in that the drawbar (66) has a generally upwardly arched shape for accommodating at least the pick-up device (2) therebelow.

5. A forage harvester according to any of the preceding claims characterized in that the pick-up device (2), the cutterhead (4) and the drawbar (66) have basically a common fore-and-aft extending vertical plane of symmetry.

6. A forage harvester according to any of the claims 1 to 4, characterized in that the pick-up device (2) has a fore-and-aft extending vertical plane of symmetry which is transversely offset relative to the basically common fore-and-aft extending vertical plane of symmetry of the cutterhead (4) and the drawbar (66).

7. A forage harvester according to claim 4 or 6 characterized in that an auger structure (3, 38) is mounted on the frame (1) vertically beneath the drawbar (66) and rearwardly of the pick-up device (2); said auger structure (3, 38) having a transverse width substantially corresponding to the transverse width of the pick-up device (2) and being operable to consolidate crop material, received from the pick-up device (2), transversely of the harvester and to deliver it rearwardly of the harvester for processing by the cutterhead (4).

8. A forage harvester according to claim 7 characterized in that:
— the auger structure (3, 38) comprises:
— an auger trough (38) which is fixed to the frame (1) and
— an auger (3) which is rotatably mounted on the frame (1) and above the auger trough (38) for cooperation therewith; and
— the pick-up device (2) is mounted for pivotal movement relative to the auger structure (3, 38) about an axis (11, 11') disposed rearwardly of said auger structure (3, 38); said pick-up device (2) being pivotable about its pivot axis (11, 11') in following the ground contour during operation on the one hand and in moving between a lowered, operative position and a raised, transport position on the other hand and having its discharge end, when in the operative position, generally in front and proximity of the leading edge of the auger trough (38).

9. A forage harvester according to either claim 4 or anyone of the claims 5 to 8 when appended to claim 4 characterized in that the drawbar (66) includes:
— a pair of forwardly and upwardly inclined, transversely spaced apart members (65) which rigidly are fixed to the frame (1) and generally straddle the cutterhead (4); and
— a forwardly and downwardly extending main portion (67) having one end thereof rigidly fixed to the upper ends of said transversely spaced apart members (65) and the other end terminating in said first hitch (68).

10. A forage harvester according to any of the preceding claims, characterized in that the drawbar (66) is of hollow construction and a main drive shaft (71) for the harvester is accommodated within the drawbar (66).

11. A forage harvester according to claim 10 characterized in that a gearbox (75) is housed within the drawbar (66) and the main drive shaft (71) is connectable to the input shaft thereof.

12. A forage harvester according to any of the preceding claims characterized in that means (61, 62/111, 112) are provided for varying the transverse spacing between the wheels (5) of the or each pair of wheels.

13. A forage harvester according to claim 12 characterized in that the or each pair of wheels (5) is mounted on a telescopic axle.

14. A forage harvester according to claim 12 characterized in that a plurality of pairs of fixed wheel mounting points (111, 112) are provided on the frame (1), the pairs of mounting points (111, 112) being spaced fore-and-aft of the machine.

15. A forage harvester according to claim 14, characterized in that the pair of mounting points (111, 112) with the wider of widest spacing is provided rearwardly of the other pair or pairs of mounting points (111, 112).

**Patentansprüche**

1. Feldhäcksler-Anhänger, der so ausgebildet ist, daß er hinter einem Zugschlepper gezogen wird und daß an ihm ein Häckselgut-Anhänger ankuppelbar ist, mit
— einem Rahmen (1), der auf zumindest einem Paar von auf dem Boden abrollenden Rädern (5) gehaltert ist;
— einer Erntematerial-Aufnahmevorrichtung (2), die auf dem Rahmen (1) an einer Stelle vor den auf dem Boden abrollenden Rädern (5) befestigt ist;
— einem Schneidkopf (4) der auf dem Rahmen (1) allgemein zwischen dem zumindest einem Paar von auf dem Boden abrollenden Rädern (5) und hinter der Aufnahmevorrichtung (2) allgemein in Ausrichtung mit deren Auslaßende befestigt ist, um im Betrieb Erntematerial von der Aufnahmevorrichtung (2) zu empfangen;
— einer Zugdeichsel (66), die an einem Ende mit dem Rahmen (1) an einer Position hinter der Aufnahmevorrichtung (2) verbunden ist und sich in Vorwärtsrichtung des Feldhäckslers erstreckt, wobei das andere Ende der Zugdeichsel in einer ersten Kupplung (68) zur Verbindung mit dem Zugschlepper endet; und
— einer zweiten Kupplung (113), die an dem Rahmen (1) am hinteren Ende des Feldhäckslers befestigt ist, um den Häckselgut-Anhänger anzukuppeln, dadurch gekennzeichnet, daß:
— die Zugdeichsel (66) starr mit ihrem einen Ende an dem Rahmen (1) befestigt ist;
— die Zugdeichsel (66) und der Schneidkopf (4) im wesentlichen eine gemeinsame sich in Längsrichtung erstreckende vertikale Symmetrieebene aufweisen;
— die Zugdeichsel (66) sich über die Aufnahmevorrichtung (2) in der Vorwärts-Bewegungsrichtung erstreckt, und
— die zweite Kupplung (113) allgemein an der Symmetrieebene angeordnet ist, wobei die Anordnung derart ist, daß der Feldhäcksler zum Gebrauch einerseits hinter dem Zugschlepper allgemein in Längsausrichtung mit diesem anbringbar ist und der Häckselgut-Anhänger hinter dem Feldhäcksler ebenfalls allgemein in Längsausrichtung hiermit anbringbar ist.

2. Feldhäcksler nach Anspruch 1, dadurch gekennzeichnet, daß der Feldhäcksler weiterhin einen allgemein aufrecht stehenden Auswurfbogen (4') aufweist, der in Verbindung mit dem Schneidkopf (4) steht und allgemein hinter diesem angeordnet ist, und daß Schneidkopf (4), die Zugdeichsel (66) und zumindest ein Teil des Auswurfbogens (4') im wesentlichen eine gemeinsame sich in Längsrichtung erstreckende vertikale Symmetrieebene aufweisen.

3. Feldhäcksler nach Anspruch 1 oder 2, dadurch gekennzeichnet, daß die Zugdeichsel (66) einen Hauptteil (67) einschließt, der sich von einer erhöhten Stelle aus in Richtung auf die erste Kupplung (66) nach unten erstreckt, um darunter zumindest die Aufnahmevorrichtung (2) unterzubringen.

4. Feldhäcksler nach Anspruch 1 oder 2, dadurch gekennzeichnet, daß die Zugstange eine allgemein nach oben gewölbte Form aufweist, um darunter zumindest die Aufnahmevorrichtung (2) unterzubringen.

5. Feldhäcksler nach einem der vorhergehenden Ansprüche, dadurch gekennzeichnet, daß die Aufnahmevorrichtung 2, der Schneidkopf (4) und die Zugdeichsel (66) im wesentlichen eine gemeinsame sich in Längrichtung erstreckende vertikale Symmetrieebene aufweisen.

6. Feldhäcksler nach einem der Ansprüche 1 bis 4, dadurch gekennzeichnet, daß die Aufnahmeverrichtung (2) eine sich in Längsrichtung erstreckende vertikale Symmetrieebene aufweist, die in Querrichtung gegenüber der im wesentlichen gemeinsamen sich in Längsrichtung erstreckenden vertikalen Symmetrieebene des Schneidkopfes (4) und der Zugdeichsel (66) versetzt ist.

7. Feldhäcksler nach Anspruch 4 oder 6, dadurch gekennzeichnet, daß eine Förderschneckenstruktur (3, 38) auf dem Rahmen (1) in Vertikalrichtung unter der Zugdeichsel (66) und hinter der Aufnahmevorrichtung (2) befestigt ist, daß die Förderschneckenstruktur (3, 38) in Querrichtung eine im wesentlichen der Breite der Aufnahmevorrichtung (2) in Querrichtung entsprechende Breite aufweist und zur Verdichtung von von der Aufnahmevorrichtung (2) empfangenen Erntematerial in Querrichtung des Feldhäckslers betreibbar ist, um das Erntematerial in Richtung auf das hintere Ende des Feldhäckslers zur Verarbeitung durch den Schneidkopf (4) zuzuführen.

8. Feldhäcksler nach Anspruch 7, dadurch gekennzeichnet, daß die Förderschneckenstruktur (3, 38) folgende Teile umfaßt:
— eine Förderschneckenwanne (38), die an dem Rahmen (1) befestift ist, und
— eine Förderschnecke (3), die drehbar an dem Rahmen (1) und oberhalb der Förderschneckenwanne (38) zum Zusammenwirken hiermit befestigt ist, und daß
— die Aufnahmevorrichtung (2) für eine Schwenkbewegung gegenüber der Förderschneckenstruktur (3, 38) um eine Achse (11, 11') befestigt ist, die hinter der Förderschneckenstruktur (3, 38) angeordnet ist, wobei die Aufnahmevorrichtung (2) um ihre Schwenkachse (11, 11') einerseits beim Nachfolgen der Bodenkontur während des Betriebes und andererseits bei der Bewegung zwischen einer abgesenkten Betriebsstellung und einer angehobenen Transportstellung schwenkbar ist und wobei die Aufnahmevorrichtung mit ihrem Auslaßende in der Betriebsstellung allgemein vor und benachbart zur Vorderkante der Förderschneckenwanne (38) angeordnet ist.

9. Feldhäcksler entweder nach Anspruch 4 oder einem der Ansprüche 5 bis 8 unter Rückbeziehung auf Anspruch 4, dadurch gekennzeichnet, daß die Zugdeichsel (66) folgende Teile einschließt:

— ein Paar von nach vorne und nach oben geneigten, mit Querabstand angeordneten Teilen (65), die starr an dem Rahmen (1) befestigt sind und allgemein rittlings zum Schneidkopf (4) angeordnet sind, und

— einen sich nach vorne und nach unten erstreckenden Hauptteil (67), dessen eines Ende starr an den oberen Enden der mit Querabstand angeordneten Teile (65) befestigt ist, während das andere Ende in der ersten Kupplung (68) endet.

10. Feldhäcksler nach einem der vohergehenden Ansprüche, dadurch gekennzeichnet, daß die Zugdeichsel (66) eine hohle Konstruktion aufweist und daß eine Hauptantriebswelle (71) für den Feldhäcksler in der Zugdeichsel (66) angeordnet ist.

11. Feldhäcksler nach Anspruch 10, dadurch gekennzeichnet, daß ein Getriebe (75) in der Zugdeichsel (66) untergebracht ist und daß die Hauptantriebswelle (71) mit der Eingangswelle des Getriebes verbindbar ist.

12. Feldhäcksler nach einem der vorhergehenden Ansprüche, dadurch gekennzeichnet, daß Einrichtungen (61, 62/111, 112) zur Änderung des Querabstandes zwischen den Rädern (5) des oder jedes Radpaares vorgesehen sind.

13. Feldhäcksler nach Anspruch 12, dadurch gekennzeichnet, daß das oder jedes Radpaar (5) auf einer teleskopartigen Achse befestigt ist.

14. Feldhäcksler nach Anspruch 12, dadurch gekennzeichnet, daß eine Mehrzahl von Paaren von festen Radbefestigungspunkten (111, 112) an dem Rahmen (11) ausgebildet ist, und daß die Paare von Befestigungspunkten (111, 112) in Längsrichtung der Maschine mit Abstand angeordnet sind.

15. Feldhäcksler nach Anspruch 14, dadurch gekennzeichnet, daß das Paar von Befestigungspunkten (111, 112) mit dem größeren oder größten Abstand hinter dem anderen Paar oder den Paaren von Befestigungspunkten (11, 112) vorgesehen ist.

**Revendications**

1. Récolteuse de fourrage du type tracté, adaptée pour être tractée derrière un tracteur de traction et pour être accouplée avec un chariot à fourrage, et comportant:

— un châssis (1) supporté sur une paire au moins de roues (5) en contact avec le sol;

— un dispositif de ramassage de récolte (2) monté sur le châssis (1), en un point situé en avant des roues (5) en contact avec le sol;

— un mécanisme de coupe (4) monté sur le châssis (1) d'une manière générale entre ladite paire au moins de roues (5) en contact avec le sol et en arrière du dispositif de ramassage (2), sensiblement en alignement avec l'extrémité d'évacuation de celui-ci pour, en service,

recevoir des produits de récolte provenant dudit dispositif de ramassage (2);

— une barre de traction (66) accouplée, au niveau d'une première extrémité avec le châssis (1), en un point situé en arrière du dispositif de ramassage (2), qui s'étend en avant de la récolteuse et dont la seconde extrémité se termine par un premier crochet d'attelage (68) en vue d'un accouplement avec ledit tracteur de traction; et

— un second crochet d'attelage (113) fixé au châssis (1), à l'arrière de la récolteuse, en vue d'accoupler ledit chariot à fourrage avec celle-ci, caractérisée en ce que:

— la barre de traction (66) est attelée au châssis d'une manière rigide, au niveau de sa première extrémité;

— ladite barre de traction (66) et le mécanisme de coupe (4) ont fondamentalement un plan de symétrie vertical qui s'étend longitudinalement, commun;

— ladite barre de traction (66) s'étend au-dessus du dispositif de ramassage (2) dans le sens de déplacement vers l'avant et

— le second crochet d'attelage (113) est placé sensiblement au niveau dudit plan de symétrie; l'agencement étant tel qu'en service,

d'une part, la récolteuse de fourrage peut être attelée derrière le tracteur de traction sensiblement en alignement longitudinal avec celui-ci, et que, d'autre part, le chariot à fourrage peut être attelé derrière la récolteuse de fourrage également sensiblement en alignement longitudinal avec celle-ci.

2. Récolteuse de fourrage selon la revendication 1, caractérisée en ce qu'elle comporte également, de surcroît, une goulotte de déversement (4') sensiblement verticale, en communication avec le mécanisme de coupe (4) et positionnée d'une manière générale en arrière de celui-ci; ledit mécanisme de coupe (4), ladite barre de traction (66) et une partie au moins de ladite goulotte de déversement (4') ayant fondamentalement un plan de symétrie vertical qui s'étend longitudinalement, commun.

3. Récolteuse de fourrage selon la revendication 1 ou 2, caractérisée en ce que la barre de traction (66) comporte une partie principale (67) qui s'étend vers le bas depuis un point en hauter, dans la direction orientée vers le premier crochet d'attelage (68), pour que soit logé sous elle au moins le dispositif de ramassage (2).

4. Récolteuse de fourrage selon la revendication 1 ou 2, caractérisée en ce que la barre de traction (66) présente une configuration sensiblement arquée vers le haut, pour que soit logé sous elle au moins le dispositif de ramassage (2).

5. Récolteuse de fourrage selon l'une quelconque des revendications précédentes, caractérisée en ce que le dispositif de ramassage (2), le mécanisme de coupe (4) et la barre de traction (66) ont fondamentalement un plan de symétrie vertical qui s'étend longitudinalement, commun.

6. Récolteuse de fourrage selon l'une quelconque des revendications 1 à 4, caractérisée en ce que le dispositif de ramassage (2) a un plan de symétrie vertical qui s'étend longitudinalement, décalé transversalement par rapport au plan de symétrie vertical qui s'étend longitudinalement, fondamentalement commun du mécanisme de coupe (4) et de la barre de traction (66).

7. Récolteuse de fourrage selon la revendication 4 ou 6, caractérisé en ce qu'une structure de vis sans fin (3, 38) est montée sur le châssis (1), verticalement au-dessous de la barre de traction (66) et en arrière du dispositif de ramassage (2); ladite structure de vis sans fin (3, 38) ayant une largeur transversale qui correspond sensiblement à la largeur transversale du dispositif de ramassage (2) et étant apte à opérer pour regrouper des produits de récolte qu'elle reçoit du dispositif de ramassage (2), transversalement par rapport à la récolteuse, et pour les délivrer en arrière de la récolteuse, en vue de leur traitement par le mécanisme de coupe (4).

8. Récolteuse de fourrage selon la revendication 7, caractérisée en ce que:
— la structure de vis sans fin (3, 38) comprend:
— une trémie de vis sans fin (38) fixée au châssis (1) et
— une vis sans fin (3) montée mobile en rotation sur le châssis (1) et au-dessus de la trémie de vis sans fin (38) en vue de coopérer avec celle-ci; et
— le dispositif de ramassage (2) est monté en vue d'un mouvement de pivotement par rapport à la structure de vis sans fin (3, 38), autour d'un axe (11, 11') disposé en arrière de ladite structure de vis sans fin (3, 38); ledit dispositif de ramassage (2) étant apte à pivoter autour de son axe de pivotement (11, 11'), d'une part, en suivant les contours du sol pendant un fonctionnement et, d'autre part, en se déplaçant entre une position active abaissée et une position de transport relevée, et ayant, lorsqu'il est dans la position active, son extrémité d'évacuation située d'une manière générale devant le bord d'attaque de la trémie de vis sans fin (38) et à proximité de celui-ci.

9. Récolteuse de fourrage selon la revendication 4 ou l'une quelconque des revendications 5 à 8 lorsqu'elles sont rattachées à la revendication 4, caractérisée en ce que la barre de traction (66) comporte:
— deux éléments (65) espacés l'un de l'autre transversalement et inclinés vers l'avant et vers le haut, qui sont fixés d'une manière rigide au châssis (1) et qui, dans l'ensemble, enjambent le mécanisme de coupe (4); et
— une partie principale (67) s'étendant vers l'avant et vers le bas, dont une extrémité est fixée d'une manière rigide aux extrémités supérieures desdits éléments (65) espacés l'un de l'autre transversalement, et dont l'autre extrémité se termine par ledit premier crochet d'attelage (68).

10. Récolteuse de fourrage selon l'une quelconque des revendications précédentes, caractérisée en ce que la barre de traction (66) est d'une construction creuse et un arbre d'entraînement principal (71) destiné à la récolteuse est reçu à l'intérieur de la barre de traction (66).

11. Récolteuse de fourrage selon la revendication 10, caractérisée en ce qu'à l'intérieur de la barre de traction (66) est logée une boîte de vitesses (75) et l'arbre d'entraînement principal (71) peut être accouplé avec l'arbre d'entrée de celle-ci.

12. Récolteuse de fourrage selon l'une quelconque des revendications précédentes, caractérisée en ce que des moyens (61, 62/111, 112) sont prévus pour modifier l'écartement transversal entre les roues (5) de la ou de chaque paire de roues.

13. Récolteuse de fourrage selon la revendication 12, caractérisée en ce que la ou chaque paire de roues (5) est montée sur un essieu télescopique.

14. Récolteuse de fourrage selon la revendication 12, caractérisée en ce que plusieurs paires de points fixes de montage de roues (111, 112) sont prévuessur le châssis (1), les paires de points de montage (111, 112) étant espacées longitudinalement par rapport à la machine.

15. Récolteuse de fourrage selon la revendication 14, caractérisée en ce que la paire de points de montage (111, 112) qui présente l'écartement le plus grand est prévue en arrière de l'autre paire ou des autres paires de points de montage (111, 112).

FIG.1

FIG.6

FIG.2

0 119 658

FIG.3

**FIG.4**

FIG.5

FIG.7

0 119 658